# EUROPÄISCHE PATENTSCHRIFT

(11) **EP 1 759 149 B1**
(45) Veröffentlichungstag und Bekanntmachung des Hinweises auf die Patenterteilung: **02.12.2009**
(21) Anmeldenummer: 05752573.5
(22) Anmeldetag: 30.05.2005
(51) Int. Cl.: F24F 13/02, F16L 23/14, B21D 5/08

(54) **SYSTEM ZUM VERBINDEN VON KLIMATISIERUNGSKANÄLEN**
SYSTEM FOR CONNECTING CLIMATISATION CHANNELS
SYSTEME DE CONNEXION DE CANAUX DE CLIMATISATION

(30) Priorität: 02.06.2004 DE 102004027078; 10.11.2004 DE 102004054401; 23.02.2005 DE 102005008604
(43) Veröffentlichungstag der Anmeldung: 07.03.2007
(73) Patentinhaber: Smitka, Günter, 58644 Iserlohn (DE)
(72) Erfinder: Smitka, Günter, 58644 Iserlohn (DE)
(74) Vertreter: Wenzel & Kalkoff
(86) Internationale Anmeldenummer: PCT/EP2005/005811
(87) Internationale Veröffentlichungsnummer: WO 2005/119132

(56) Entgegenhaltungen:
- EP-A- 0 537 594
- EP-A- 0 634 598
- WO-A-89/10512
- DE-A1- 10 237 678
- DE-A1- 19 612 239
- US-A- 4 566 724
- PATENT ABSTRACTS OF JAPAN Bd. 1995, Nr. 02, 31. März 1995 (1995-03-31) & JP 06 323475 A (MIE DAKUTO KOGYO KK), 25. November 1994 (1994-11-25)

## Beschreibung

Die Erfindung betrifft eine Anlage und ein Verfahren zum Herstellen von Kanalteilstücken für Klimatisierungskanäle.

Klimatisierungskanäle bestehen aus aneinandergesetzten im Querschnitt viereckigen Kanalteilstücken aus Blech. Zum Verbinden der Kanalteilstücke ist an deren Enden jeweils ein Flanschrahmen aus Flanschprofilen mit in Öffnungen der Profile einsteckbaren Winkelstücken zum Aufschieben der Flanschrahmen auf die Enden der Kanalteilstücke vorgesehen. Die Flanschrahmen benachbarter Kanalteilstücke werden mittels Schrauben, die durch Bohrungen in den Eckbereichen der Eckwinkel greifen, verbunden.

Die oberen und die unteren Schenkel der Profile werden mit dem eingeschobenen Blech des jeweiligen Kanalteilstücks durch Druckfügepunkte oder Schweißpunkte oder dergleichen fest verbunden. Insbesondere bei großen Kanalquerschnitten ist mit dieser Befestigung ein hoher Arbeitsaufwand verbunden. Außerdem werden Handzangen, Schweißvorrichtungen etc. gebraucht. Es ist bereits versucht worden, die Verbindung zwischen den Flanschprofilen und dem Kanalblech formschlüssig durch Verrasten von Teilen des Kanalblechs und des Flanschprofils zu erleichtern. Gemäß DE 102 37 678 A1 werden im Abstand vom Rand des Kanalblechs Nocken ausgestanzt und hochgebogen, die beim Einschieben des Kanalblechs in das Profil hinter einer abgewinkelten Prägenockenkante des Profils einrasten. Dabei entstehen jedoch Löcher im Kanalblech, die außerdem nach dem Herstellen der Kanalteilstücke an diesen ausgestanzt werden müssen. Außerdem sind auf diese Weise die erforderlichen Befestigungskräfte nicht zu erreichen.

Aus EP 0 634 598 A1 ist ein Verfahren zum Herstellen von Kanalteilstücken für Klimatisierungskanäle aus einer Blechbahn bekannt, wobei im Bereich der beiden Ränder der Blechbahn ein durchgehender Vorsprung in Form einer Rille für eine Rastverbindung mit einem Profil, aus dem ein Flanschrahmen zum Verbinden der Kanalteilstücke hergestellt wird, gebildet wird. Das Profil des Flanschrahmens besteht aus einem extrudierten Kunststoffprofil, vorzugsweise PVC, wie z. B. "Tecnopro CMP", hergestellt von Montecartini. Es weist an einem der beiden Schenkel, die einen Schlitz zum Einschieben des Kanalblechs bilden, eine durchgehende im Querschnitt gewölbte Aufnahme für den Vorsprung des Kanalblechs auf. Damit wird eine - auf das Gewicht bezogen - leichte Verbindungsvorrichtung hergestellt. Auch das Aufschieben des Flanschrahmens auf das zugeordnete Kanalteilstück lässt sich relativ leicht durchrühren, weil die beiden Schenkel des Kunststoffprofils, die das den Vorsprung mit der Rille aufweisende Kanalblech zwischen sich aufnehmen, wegen der relativ hohen Flexibilität des Kunststoffmaterials leicht spreizbar sind. Dadurch wird das Einschieben des Kanalblechs in das Profil bis zum Einrasten des stegförmigen Vorsprungs des Kanalblechs in der gewölbten Aufnahme des Profils unterstützt.

Damit sich eine möglichst feste Verbindung zwischen dem Flanschrahmen und der Blechbahn ergibt, wird der die gewölbte Aufnahme tragende Schenkel des Profils möglichst noch mit Nieten oder anderen Befestigungselementen mit der Blechbahn fest verbunden. Die Herstellung des die Rille bildenden durchgehenden Vorsprungs im Bereich des Randes jeder Seite der Kanalteilstücke erfordert geeignete Formvorrichtungen, mit denen an den vier Rändern der beiden Öffnungen der Kanalteilstücke die die Rille bildenden Vorsprünge in zusätzlichen Arbeitsgängen vor der Kanalmontage hergestellt werden.

Es besteht daher die Aufgabe, einen hohen Zeit- und Kostenaufwand für ein Verfahren zur Herstellung einer Rastverbindung zwischen dem Flanschrahmen und dem zugeordneten Kanalteilstück zu vermeiden und Voraussetzungen für eine gegen Herausziehen oder Herausgleiten des Kanalblechs aus dem Profil gesicherte Rastverbindung zu schaffen.

Ausgehend von dem oben genannten bekannten Verfahren ist zur Lösung dieser Aufgabe erfindungsgemäß vorgesehen, dass
- der durchgehende oder Unterbrechungen aufweisende Vorsprung in Form einer Rille vor dem Abkanten und Falten der Kanalteilstücke
- mittels an beiden Seiten der von einem Blechcoil abgezogenen Blechbahn angeordneter Vorrichtungen ausgeformt wird und
- die Rastverbindung durch eine Aufnahmerille in einem Profilblech des Flanschrahmens zum Verrasten mit der Rille vorbereitet wird.

Die Lösung der Erfindung besteht darin, daß das kanalblechseitige Befestigungselement, nämlich die Ausformung des Vorsprungs in Form einer Rille keinen zusätzlichen Arbeitsaufwand oder gesonderte Bearbeitungsschritte erfordert. Vielmehr wird das Herstellen des Vorsprungs im Kanalblech bereits in die Herstellung der Kanalteilstücke integriert. Hierfür sind an geeigneter Stelle zwischen der Abwickelstation, wo das Kanalblech vom Coil abläuft, und der Station für das Ablängen, Kanten und Falzen der Kanalteilstücke geeignete Vorrichtungen zum Einformen des durchgehenden oder Unterbrechungen aufweisenden Vorsprungs an beiden Seiten der vom Coil gezogenen Blechbahn angeordnet. Vorzugsweise besteht die Vorrichtung aus einem Formwalzen- oder Formrollenpaar mit ineinandergreifenden Formprofilen. Für einen durchgehenden Vorsprung ist das Formrollenpaar ständig im Formeingriff mit dem Kanalblech. Eine Unterbrechung des Vorsprungs kann über das Profil der Formwalzen oder über eine Taktsteuerung der Kanalmaschine erreicht werden.

Der entscheidende Vorteil der Lösung nach der Erfindung besteht darin, daß außer üblichen Gummihämmern oder dergleichen für die formschlüssige Verbindung zwischen Kanalblech und Flanschprofil keine weiteren Werkzeuge erforderlich sind. Vor allem entfällt der hohe Zeit- und Kostenaufwand, der mit den bisherigen Befestigungsmethoden und mit den Vorbereitungen hierfür verbunden ist.

Der Vorsprung besteht aus einer umlaufenden oder Unterbrechungen aufweisenden Rille im Abstand vom Rand der Wand der Blechbahn, die in eine Aufnahmerille des Profils einrastet.

Die notwendige Sicherheit der Rastverbindung zwischen dem Flanschrahmen und den Seiten des Kanalteilstücks wird dadurch erreicht, dass eine der Form des durchgehenden oder Unterbrechungen aufweisenden Vorsprungs in dem Kanalblech entsprechende Aufnahmerille in einem Profilblech des Flanschrahmens zum Verrasten mit der Rille ausgebildet wird.

Die Erfindung schließt auch eine Anlage zum Herstellen von Kanalteilstücken für Klimatisierungskanäle aus einer Blechbahn ein, mit der sich der hohe Zeit- und Kostenaufwand für die Schaffung der Vorraussetzungen für eine sichere und haltbare Rastverbindung vermeiden lässt.

Aus der EP 0 537 594 A1 ist zwar bereits eine Anlage zum Herstellen von Kanalteilstücken für Klimatisierungskanäle aus einer Blechbahn
- mit einer Vorrichtung zum Abziehen der Blechbahn von einem Blechcoil und
- mit einer Station zum Abkanten und Falten der Kanalteilstücke
bekannt. Allerdings dient diese Anlage zum Herstellen von Kanalteilstücken mit angeformten Profilflanschen. Hierzu wird das Blechband mittels einer Zugvorrichtung durch eine Bearbeitungsebene hindurchgeführt. In dieser Ebene wird das Flanschprofil durch eine mit den Rändern der Blechbahn einstückig verbundene Randpartie gebildet. Die Randpartie weist ein im wesentliches geschlossenes Hohlprofil auf. Hierfür sind beiderseits der Blechbahn eine Vielzahl von Bearbeitungswalzen und Biege- bzw. Profilierrollen vorgesehen. Erst wenn das Hohlprofil, das später den Flanschrahmen des jeweiligen Kanalteilstücks bilden soll, fertig hergestellt ist, wird die Blechbahn zu der Station weitergeführt, in der das Abkanten und Falten der Kanalteilstücke stattfindet.

Hiervon unterscheidet sich die erfindungsgemäße Anlage dadurch, dass
- an beiden Rändern der Blechbahn vor der Station zum Abkanten und Falten der Kanalteilstücke Vorrichtungen zum Herstellen von durchgehenden oder Unterbrechungen aufweisenden Vorsprüngen als Rillen parallel zum sowie im Abstand vom Rand der Blechbahn angeordnet sind.

Damit ermöglicht die Erfindung, wie bereits für das erfindungsgemäße Verfahren angegeben ist, dass das kanalblechseitige Befestigungselement, nämlich die Ausformung des Vorsprungs in Form einer Rille keinen zusätzlichen Arbeitsaufwand oder gesonderte Bearbeitungsschritte erfordert. Hierfür sind nur an geeigneter Stelle zwischen der Abwickelstation, wo das Kanalblech vom Coil abläuft, und der Station für das Ablängen, Kanten und Falzen der Kanalteilstücke geeignete Vorrichtungen zum Einformen des durchgehenden oder Unterbrechungen aufweisenden Vorsprungs an beiden Seiten der vom Coil gezogenen Blechbahn angeordnet. Vorzugsweise besteht die Vorrichtung aus einem Formwalzen- oder Formrollenpaar mit ineinandergreifenden Formprofilen.

Für die Erfindung kommt jede Profilform für den Flanschrahmen in Betracht, die sich zur Ausbildung einer Aufnahme zum Einrasten eines am Rand des Kanalteilstücks umlaufenden Vorsprungs in Form einer Rille zu Befestigungszwecken eignet Deshalb hat die Erfindung einen weiten Anwendungsbereich.

Die Erfindung wird nachstehend anhand von Ausführungsbeispielen mit Bezug auf die Zeichnungen näher erläutert. In den Zeichnungen zeigen:
- Fig. 1: eine Darstellung einer Anlage zum Herstellen von Kanalteilstücken;
- Fig. 1a: eine in Fig. 1 mit D bezeichnete Einzelheit der Darstellung von Fig. 1;
- Fig. 2: eine schematische Querschnittszeichnung eines Profils und eines Randbe- reichs eines vorn mit einer Abkantung als Vorsprung versehenen Ka- nalblechteils;
- Fig. 3: eine ähnliche Darstellung wie in Fig. 2, jedoch mit einem Eckwinkel in dem Profil und mit einem in das Profil eingeschobenen und dort eingerasteten Kanalblechteil;
- Fig. 4: eine weitere schematische Querschnittsansicht eines Profils mit einer abweichenden Querschnittsgestaltung zwecks Aufnahme eines Ka- nalblechteils mit nach unten weisender Abkantung am vorderen Rand;
- Fig. 5, 6,7a: schematische Darstellungen mit weiteren Formen für die Abkantung am vorderen Rand des Kanalblechs und für das Profil;
- Fig. 7-9: schematische Querschnittsdarstellungen von Beispielen für eine Befesti- gung des Kanalblechs im Profil mittels ineinandergreifender und verra- steter Rillen als Vorsprung sowohl am inneren Schenkel des Profils als auch im Randbereich des Kanalblechs ;
- Fig. 10: eine schematische Querschnittsdarstellung zur Befestigung des Ka- nalblechs im Profil mittels besonders effektiver ineinandergreifender und so miteinander verrasteter Schrägrillen im Kanalblech sowie im Pro- filblech;
- Fig. 11: eine ähnliche Darstellung wie in Fig. 10, jedoch mit einer hakenförmig am inneren Schenkel des Profils endenden Schrägrille;
- Fig. 12: eine vergrößerte Querschnittsansicht der hakenförmigen Schrägrille von Fig. 11 mit gleicher Bedeutung für die Wirkung der Befestigung in Fig. 10;
- Fig. 13, 14, 15: Querschnittsansichten weiterer Ausgestaltungen der Erfindung.

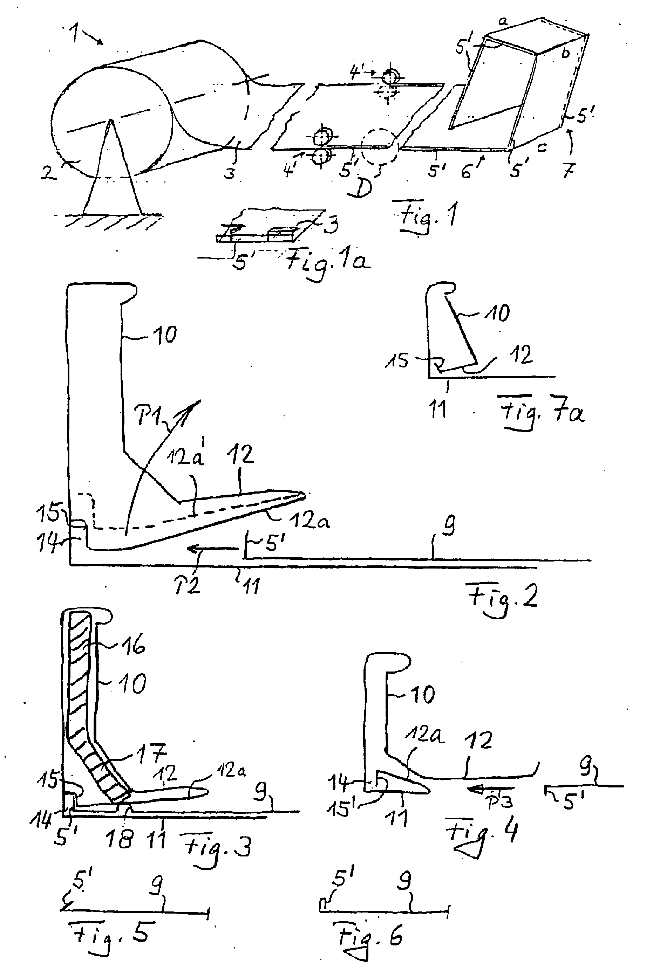

Die Figuren 1a, 2, 3, 4, 5, 6 und 7a stellen Ausführungsbeispiele dar, die nicht unter die Erfindung fallen. In Fig. 1 wird von einem in einer Haspelvorrichtung 1 gelagerten Blechcoil 2 eine Blechbahn 3 abgezogen und einer Anlage 6 zum Herstellen von Kanalteilstücken 7 zugeführt. Die Blechbahn 3 durchläuft auf diesem Weg zwei vorzugsweise einander gegenüberliegend an den Randbereichen der Blechbahn 3 angeordnete Vorrichtungen 4', die aus paarweise zusammenwirkenden Formwalzen bestehen. So wird am Rand der Blechbahn 3 auf beiden Seiten jeweils eine fortlaufende oder - je nach Form der Walzen und/oder je nach Taktsteuerung der Anlage - mit Unterbrechungen versehene Abkantung 5' ausgeformt, wie insbesondere aus Fig. 1a als Einzelheit D von Fig. 1 ersichtlich ist. Nach dem Kanten und Falzen der Kanalteilstücke 7 in der Station 6 mit Ausbildung von Kanten a, b und c an dem Kanalteilstück 7 verläuft die Abkantung 5' auf beiden Seiten im Randbereich der jeweiligen Öffnung des Kanalteilstücks 7.

Fig. 2 zeigt ein Profil 10 für den Flanschrahmen, das im oberen und mittleren Bereich einen nicht dargestellten Eckwinkel aufnimmt. Im unteren Bereich setzt sich ein äußerer Schenkel 12 in einem Federschenkel 12a in der dargestellten Weise fort. Am freien Ende des Federschenkels 12a wird durch eine Abstufung bzw. Abwinkelung 15 eine Aufnahme 14 gebildet, in die die Abkantung 5' des Kanalblechs 9 einrastet (vgl. Fig. 3), wenn das Kanalblech 9 in Richtung des Pfeils P2 in das Profil 10 eingeschoben ist Das Kanalblech 9 ist mit der Abkantung 5' in der Aufnahme 14 sicher gegen Herausziehen oder Herausgleiten gesichert. Beim Einschieben des Kanalblechs 9 drückt die Abkantung 5' den Federschenkel 12a federnd nach oben, wie Pfeil P1 und die gestrichelte Stellung des Federschenkels 12a' zeigt, ehe das Kanalblech 9 seine endgültige Lage erreicht und der Federschenkel 12a zum Verrasten der Abkantung 5' in seine Ursprungslage zurückkehrt.

In dem weiteren Ausführungsbeispiel von Fig. 3 ist in das Profil 10 ein Eckwinkel 16 eingeschoben, der unten eine Schräge 17 aufweist, unterhalb derer der Federschenkel 12a mit der Abwinkelung 15 beim Einschieben des Kanalblechs 9 federnd ausweichen kann, nämlich bis zum Verrasten der Abkantung 5' in der Aufnahme 14 des Profils 10. Eine umlaufende oder Unterbrechungen aufweisende Rille 18 im Kanalblech 9 im Abstand von der Abkantung 5', wobei die Rille 18 ebenfalls durch Formwalzen beim Ablaufen der Blechbahn 3 vom Coil 2 (vgl. Fig. 1) eingeformt wird, dient zur Abstützung des Eckwinkels 16 in dessen Position im fertig montierten Zustand.

Das weitere Ausführungsbeispiel gemäß Fig. 4 unterscheidet sich im wesentlichen dadurch, daß an dem Kanalblech 9 beim Herstellen des Kanalteilstücks (vgl. Fig. 1) eine nach innen weisende Abkantung 5' hergestellt ist. Entsprechend sind der äußere Schenkel 12, der innere Schekel 11 und der Federschenkel 12a des Profils 10 so geformt, daß die in der Zeichnung nach unten weisende Abkantung 5' beim Einschieben des Kanalblechs 9 in das Profil 10 in der Aufnahme 14 hinter der Abwinkelung 15' nach federndem Nachgeben des Federschenkels 12a einrasten kann.

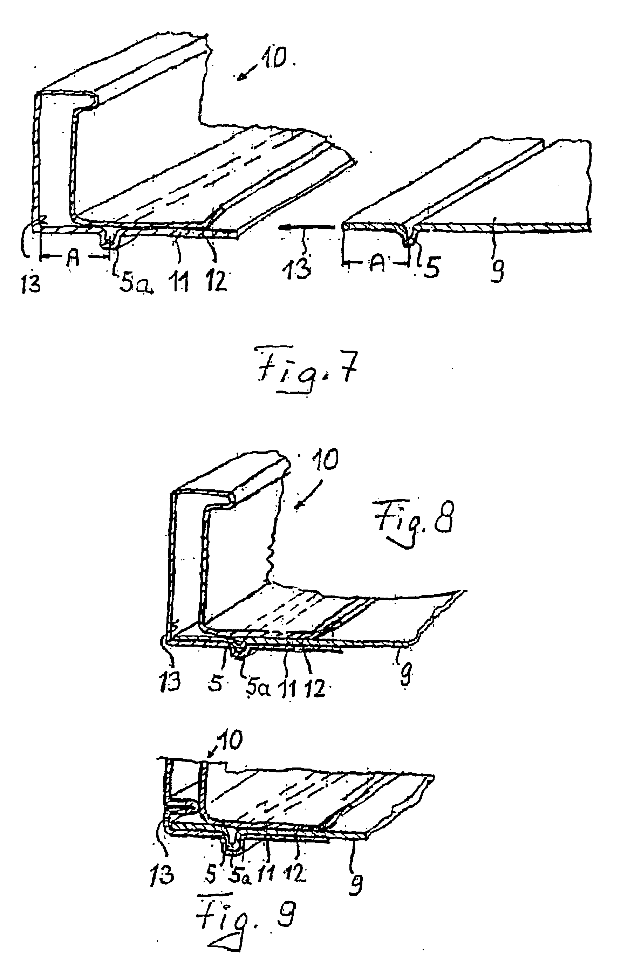

Fig. 5 und Fig. 6 verdeutlichen als Beispiele, daß die Abkantung 5' am Rand des Kanalblechs 9 verschieden geformt sein kann, ebenso wie die Profile 10 (vgl. Fig. 7a) in Verbindung mit einer entsprechend geformten Abkantung des Kanalblechs 9.

Fig. 7, 8 und 9 zeigen, daß in einer Anlage wie in Fig. 1 statt einer Abkantung 5' oder zusätzlich zu dieser eine fortlaufende oder mit Unterbrechungen versehene Rille 5 im Abstand A vom Rand des Kanalblechs 9 ausgeformt sein kann. Im Profil 10 ist eine entsprechende Rille 5a am inneren Schenkel 11 des Profils 10 ausgeformt. Der äußere Schenkel 12 drückt mit Vorspannung gegen den inneren Schekel 11. Die Rille 5 rastet form- und kraftschlüssig in dem Innenprofil der Rille 5a im Profil 10 ein, wenn das Kanalblech 9 zwischen die Schenkel 11, 12 bis zum Erreichen des Anschlags 13 in das Profil 10 eingeschoben ist. Es ergibt sich eine praktisch nur schwer lösbare Befestigung des Kanalblechs 9 am Flanschprofil 10. Diese Befestigungslage zeigt Fig. 8 und ebenfalls Fig. 9, wobei letztere veranschaulicht, daß die sonstige Querschnittsform des Flanschprofils für die Befestigungsart keine Rolle spielt.

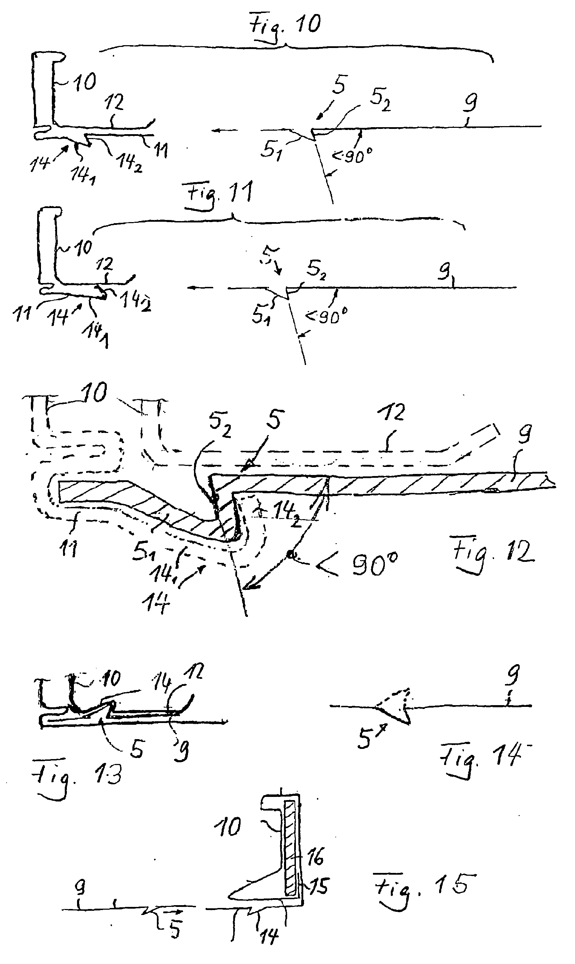

In dem bevorzugten Ausführungsbeispiel von Fig. 10 ist die Rille 5 im Kanalblech 9 als Schrägrille bestehend aus einer Einsteckschräge 5₁ und einer Halteschräge 5₂ unter einem Winkel von weniger als 90° gegenüber der Kanalblechebene ausgebildet. Entsprechend weist die Aufnahme 14 am inneren Schenkel 11 des Profils 10 eine entsprechende Schrägrille mit einer Anlageschräge 14₁ und einer Rastschräge 14₂ auf. Wenn das Kanalblech 9 in das Profil 10 eingeschoben und die beiden Schrägrillen - Rille 5 und Aufnahme 14 - miteinander verrastet sind, ergibt sich eine Befestigung wie bei einem Widerhaken.

Das gleiche gilt für das Beispiel in Fig. 11 mit dem Unterschied, daß der innere Schenkel 11 des Profils 10 hakenförmig ausläuft. Auch hier ist die schräge Lage der Rille 5 und der Aufnahme 14 wichtig für eine Befestigung mit hoher Auszugskraft.

Die Eingriffsverhältnisse von Fig. 10 und 11 sind in der vergrößerten Darstellung von Fig. 12 leichter wahrzunehmen. Auch wenn dort die Rastschräge 14₂ hakenförmig ausläuft, gelten die Eingriffsverhältnisse sinngemäß auch für Fig. 10, wo sich der innere Schenkel 11 noch über die Rille 5 hinweg fortsetzt. Entscheidend für die Befestigung bleibt die Halteschräge 5₂ und die entsprechende Rastschräge 14₂ mit einem Winkel von weniger als 90° gegenüber dem Kanalblech 9.

Fig. 13 verdeutlicht, dass die Rille 5 im Kanalblech 9 auch nach außen verlaufen kann und die entsprechende rillenförmige Aufnahme 14 im äußeren Schenkel 12 des Profils 10 entsprechend nach außen weist. Fig. 14 zeigt, dass die Rille 5 im Kanalblech 9 auch abwechselnd nach innen und nach außen verlaufen kann. Fig. 15 verdeutlicht, daß sich die erfindungsgemäße Verbindung mittels einer Schrägrille auch für andere Querschnittsformen des Profils 10 ohne weiteres anwenden lässt, wo das Profilblech mit einer inneren Abkantung 15 endet und durch das Verschrauben des Eckwinkels 16 mit dem nicht dargestellten benachbarten Flansch fest verklemmt wird.

## Patentansprüche

1. Verfahren zum Herstellen von Kanalteilstücken für Klimatisierungskanäle aus einer Blechbahn, wobei die Kanalteilstücke (7) durch Abkanten und Falten der Blechbahn (3) gebildet werden und an beiden Enden der Kanalteilstücke (7) jeweils ein durchgehender oder Unterbrechungen aufweisender Vorsprung in Form einer Rille (5) für eine Rastverbindung mit einem Profil, aus dem ein Flanschrahmen zum Verbinden der Kanalteilstücke hergestellt wird, ausgeformt wird,
**dadurch gekennzeichnet, dass**
- der Vorsprung in Form einer Rille (5) im Bereich der beiden Ränder der Blechbahn (3) vor dem Abkanten und Falten der Kanalteilstücke (7)
- mittels an beiden Seiten der von einem Blechcoil (2) abgezogenen Blechbahn (3) angeordneter Vorrichtungen (4') ausgeformt wird und
- die Rastverbindung durch eine Aufnahmerille (5a) in einem Profilblech (10) des Flanschrahmens zum Verrasten mit der Rille (5) vorbereitet wird.

2. Anlage zum Herstellen von Kanalteilstücken (7) für Klimatisierungskanäle aus einer Blechbahn (3),
- mit einer Vorrichtung (1) zum Abziehen der Blechbahn (3) von einem Blechcoil (2) und
- mit einer Station (6) zum Abkanten und Falten der Kanalteilstücke (7),
**dadurch gekennzeichnet, dass**
- an beiden Rändern der Blechbahn (3) vor der Station (6) zum Abkanten und Falten der Kanalteilstücke (7) Vorrichtungen (4') zum Herstellen von durchgehenden oder Unterbrechungen aufweisenden Vorsprüngen als Rillen (5) parallel zum sowie im Abstand vom Rand der Blechbahn (3) angeordnet sind.

## Claims

1. Method for producing duct sections for air conditioning ducts made of a metal sheet, whereby the duct sections (7) are formed by bevelling and folding of the metal sheet (3) and a projection in form of a groove (5) continuous or having interruptions is respectively formed at both ends of the duct sections (7) for a snap-in engagement with a profile from which a flange frame is produced for connecting the duct sections,
**characterized in that**
- the projection in form of a groove (5) is moulded in the area of both edges of the metal sheet (3) before the bevelling and folding of the duct sections (7)
- by means of devices (4') placed on both sides of the metal sheet (3) unwound from a sheet metal coil (2) and
- the snap-in engagement is prepared by a receiving groove (5a) in a profile metal sheet (10) of the flange frame for a snap-in engagement with the groove (5).

2. Installation for producing duct sections (7) for air conditioning ducts made of a metal sheet (3),
- with a device (1) for unwinding the metal sheet (3) from a sheet metal coil (2) and
- with a station (6) for bevelling and folding the duct sections (7)
**characterized in that**
- devices (4') for producing continuous projections or projections having interruptions as grooves (5) are placed on both edges of the metal sheet (3) before the station (6) for bevelling and folding the duct sections (7) parallel to the edge of the metal sheet (3) and spaced thereof.

## Revendications

1. Procédé pour fabriquer des tronçons de voie pour des voies de climatisation faits en une feuille de tôle, les tronçons de voie (7) étant formés par chanfreinage et pliage de la feuille de tôle (3) et une saillie en forme de rainure (5), continue ou présentant des interruptions, étant moulée respectivement aux deux extrémités des tronçons de voie (7) pour un assemblage à encoches avec un profil à partir duquel un cadre de bride est fabriqué pour relier les tronçons de voie,
**caractérisé en ce**
- **que** la saillie en forme de rainure (5) est moulée dans la zone des deux bords de la feuille de tôle (3) avant le chanfreinage et le pliage des tronçons de voie (7)
- au moyen de dispositifs (4') placés sur les deux côtés de la feuille de tôle (3) qui est dévidée à partir d'une bobine de tôle (2) et
- l'assemblage à encoches est préparé par une rainure de logement (5a) dans une tôle de profil (10) du cadre de bride pour s'enclencher avec la rainure (5).

2. Installation pour fabriquer des tronçons de voie (7) pour des voies de climatisation faits en une feuille de tôle (3)
- avec un dispositif (1) pour dévider la feuille de tôle (3) à partir d'une bobine de tôle (2) et
- avec un poste (6) pour chanfreiner et plier les tronçons de voie (7),
**caractérisée en ce**
- **que** des dispositifs (4') pour fabriquer des saillies continues ou qui présentent des interruptions comme rainures (5) sont placés sur les deux bords de la feuille de tôle (3) avant le poste (6) pour chanfreiner et plier les tronçons de voie (7) parallèllement au bord de la feuille de tôle (3) et espacés de celui-ci.
